# EUROPÄISCHE PATENTSCHRIFT

(11) **EP 3 668 699 B1**
(45) Veröffentlichungstag und Bekanntmachung des Hinweises auf die Patenterteilung: **27.10.2021**
(21) Anmeldenummer: 18758570.8
(22) Anmeldetag: 16.08.2018
(51) Int. Cl.: B29C 49/80, G01N 21/00, B29C 49/46

(54) **BLASFORMMASCHINE MIT REINRAUM UND INSPEKTION VON BEHÄLTNISSEN**
BLOW MOLDING MACHINE HAVING A CLEAN ROOM AND INSPECTION OF CONTAINERS
MACHINE DE MOULAGE PAR SOUFFLAGE MUNIE D'UN ESPACE STÉRILE ET CONTRÔLE DE RÉCIPIENTS

(30) Priorität: 16.08.2017 DE 102017118656
(43) Veröffentlichungstag der Anmeldung: 24.06.2020
(73) Patentinhaber: Krones AG, 93073 Neutraubling (DE)
(72) Erfinder: HÖLLRIEGL, Thomas, 93073 Neutraubling (DE); SCHMITT, Robert, 93073 Neutraubling (DE); FRANKENBERGER, Günter, 93073 Neutraubling (DE); EICHENSEHER, Andreas, 93073 Neutraubling (DE)
(74) Vertreter: Bittner, Bernhard
(86) Internationale Anmeldenummer: PCT/EP2018/072192
(87) Internationale Veröffentlichungsnummer: WO 2019/034727

(56) Entgegenhaltungen:
- WO-A1-2014/075770
- DATABASE WPI Week 200039 Thomson Scientific, London, GB; AN 2000-446231 XP002786453, -& JP 2000 158527 A (DAIWA SEIKAN KK) 13. Juni 2000 (2000-06-13)

## Beschreibung

Die vorliegende Erfindung bezieht sich auf eine Vorrichtung zum Behandeln von Behältnissen und insbesondere zum Umformen von Kunststoffvorformlingen zu Kunststoffbehältnissen. Die vorliegende Erfindung wird unter Bezugnahme auf eine sogenannten Blasformmaschine beschrieben, es wird jedoch darauf hingewiesen, dass die Erfindung auch bei anderen Vorrichtungen zum Behandeln von Behältnissen, wie beispielsweise Fülleinrichtungen Anwendung finden kann. Dennoch bietet die Anwendung auf Blasformaschinen besondere Vorteile, die im Rahmen der Beschreibung eingehend dargelegt werden.

Derartige Vorrichtungen zum Umformen von Kunststoffvorformlingen zu Kunststoffbehältnissen sind aus dem Stand der Technik seit langem bekannt. Dabei werden erwärmte Kunststoffvorformlinge der Vorrichtung zugeführt und in einer Vielzahl von Umformungsstationen zu Kunststoffbehältnissen umgeformt. In jüngerer Zeit ist es bekannt geworden, derartige Umformungsprozesse in einem Isolator durchzuführen. Der Isolator wird durch Sterilisation entkeimt und das Innere des Isolators wird im Folgenden auch aseptischer Raum, Steril- oder Reinraum genannt. Die Umformung im Isolator bietet den Vorteil, dass eine Sterilisation nicht des anschließend gefertigten Behältnisses erfolgen muss, sondern es auch bereits möglich ist, die Kunststoffvorformlinge, die eine wesentlich geringere Fläche aufweisen zu sterilisieren.

Aus der JP 2000 158 527 A ist eine Fertigungslinie zum kontinuierlichen Spritzgießen eines vorgeformten Artikels zum Blasformen einer transparenten leeren Flasche, zum Einfüllen der Inhaltsflüssigkeit in die leere Flasche und zum Anbringen eines Verschlusses an der gefüllten Flasche in einem sterilen Raum bekannt, wobei nach Inspektion der Vorform eine als defekt identifizierte Vorform aus der Produktionslinie ausgetragen wird.

Aus der WO 2014/075770 A1 ist eine Inspektionsanordnung für die Inspektion von Behältermündungen von Behältern, mit einer Kamera und einer Beleuchtungsvorrichtung bekannt. Die Kamera weist dabei wenigstens einen Bildaufnehmer und wenigstens ein Objektiv auf, wobei als fehlerhaft erkannte Behälter mittels einer Ausleiteinrichtung entfernbar sind.

Bei der Herstellung derartiger Kunststoffbehältnisse und auch bei den nachfolgenden Prozessen kann es zu Fehlern insbesondere durch den Blasformprozess kommen. Diese Fehler können beispielsweise bewirken, dass die Behältnisse fehlerhaft hergestellt sind, beispielsweise falsche Wandungsstärken aufweisen. Derartige Behältnisse sind für die Weiterbehandlung ungeeignet, da sie beispielsweise bei Befüllung mit bestimmten Getränken platzen können und so Anlagen verunreinigen können. Aus dem Stand der Technik der Anmelderin sind daher Inspektionseinrichtungen bekannt. Dabei handelt es sich hier um eine separate Einheit, die dem eigentlichen Blasmodul zugeschaltet ist. Inspektionseinrichtungen sind teilweise auch innerhalb eines Reinraums angeordnet. Im Falle einer Wartung oder Inspektion derartiger Inspektionseinrichtungen tritt das Problem auf, dass zu diesem Zweck der Reinraum geöffnet werden muss. Dies zieht in der Folge eine neue Sterilisation der Anlage nach sich und damit auch Stillstände der Anlage mit zum Teil erheblichen Ausfallzeiten. Genauer muss bei einer Wartung der Inspektionskomponenten in den eigentlichen Sterilraum eingegriffen werden und insbesondere bei einer aseptischen Maschine müsste diese danach wieder mit hohem Aufwand bis zu mehreren Stunden sterilisiert werden.

Der vorliegenden Erfindung liegt daher die Aufgabe zugrunde eine derartige Vorrichtung mit einer Inspektionsmöglichkeit zu schaffen, welche auch in einem Reparatur- oder Wartungsfall der Inspektionseinrichtung in einem laufenden Betrieb gehalten werden kann oder aber bei der zumindest der Reinraum selbst nicht geöffnet zu werden braucht, bzw. die Sterilatmosphäre nicht gestört zu werden braucht und die Behältnisböden beobachten kann.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Behandeln von Behältnissen und insbesondere zum Umformen von Kunststoffvorformlingen zu Kunststoffbehältnissen weist eine Transportvorrichtung auf, welche die Behältnisse entlang eines vorgegebenen Transportpfads transportiert. Dabei weist diese Transporteinrichtung einen beweglichen und insbesondere drehbaren Träger auf, an dem eine Vielzahl von Behandlungsstationen angeordnet ist, welche zum Behandeln der Kunststoffvorformlinge und/oder Kunststoffbehältnisse geeignet und bestimmt sind. Daneben weist die Vorrichtung einen Reinraum auf, der den Transportpfad der Kunststoffvorformlinge wenigstens abschnittsweise umgibt und der mittels wenigstens einer Wandung gegenüber der Umgebung abgegrenzt ist.

Erfindungsgemäß weist die Vorrichtung mindestens eine Inspektionseinrichtung zum Inspizieren der Behältnisse auf, wobei diese Inspektionseinrichtung eine Bildaufnahmeeinrichtung aufweist und diese Bildaufnahmeeinrichtung wenigstens teilweise außerhalb des Reinraums angeordnet ist und wenigstens einen Bereich der Behältnisse durch wenigstens eine Wandung und bevorzugt eine Wandung des Reinraums hindurch beobachtet. Insbesondere handelt es sich dabei um eine Wandung des Sterilraums und bevorzugt eine Wandung, welche diesen Sterilraum begrenzt.

Bevorzugt beobachtet die Bildaufnahmeeinrichtung oder die Inspektionseinrichtung die Behältnisse durch eine Grenze des Reinraums hindurch.

Bei einer bevorzugten Ausführungsform weist die Bildaufnahmeeinrichtung eine Kamera, beispielsweise eine CCD-Kamera oder dergleichen auf, wobei diese Kamera die Aufnahme von ortsaufgelösten Bildern ermöglicht.

Bei einer weiteren bevorzugten Ausführungsform handelt es sich bei dem beweglichen Träger um einen drehbaren Träger. Besonders bevorzugt ist an dem beweglichen Träger eine Vielzahl von Umformungsstationen angeordnet, welche die Kunststoffvorformlinge zu den Kunststoffbehältnissen umformen. Falls es sich bei der erfindungsgemäßen Vorrichtung um eine andere Vorrichtung wie etwa einen Füller oder einen Verschließer handelt, kann es sich bei dem jeweiligen Behandlungseinrichtungen beispielsweise um Füllorgane handeln oder auch um Verschließorgane, welche die Behältnisse mit Verschlüssen verschließen. Besonders bevorzugt weisen die einzelnen Umformungsstationen Reckstangen auf, bzw. stangenartige Körper, welche in die Kunststoffvorformlinge einführbar sind, um diese in deren Längsrichtung zu dehnen.

Bei einer weiteren vorteilhaften Ausführungsform weisen die einzelnen Umformungsstationen Blasformen auf, welche einen Hohlraum ausbilden, innerhalb dessen die Kunststoffvorformlinge zu den Kunststoffbehältnissen expandierbar sind. Diese Blasformen sind dabei bevorzugt mehrteilig ausgebildet und weisen zwei Seitenteile und ein Bodenteil auf. Diese Seitenteile sind dabei bevorzugt an Seitenteilträgern angeordnet, welche bezüglich einander schwenkbar sind, um die Blasformen zu öffnen und zu schließen.

Während der Herstellung werden dabei Kunststofvorformlinge in die Blasformen eingegeben und innerhalb dieser Blasformen expandiert. Anschließend werden die durch Expansion entstandenen Kunststoffbehältnisse wieder den Blasformen entnommen. Die wenigstens eine Inspektionseinrichtung ist bevorzugt in einem Bereich der Vorrichtung angeordnet, in dem die Blasformen nach der Expansion der Kunststoffvorformlinge wieder in einem wenigstens teilweise geöffneten Zustand sind.

Daneben können die Umformungsstationen auch Beaufschlagungseinrichtungen, wie beispielsweise Blasdüsen aufweisen, welche die Kunststoffvorformlinge mit einem flüssigen oder gasförmigen Medium, bevorzugt einem gasförmigen Medium beaufschlagen.

Daneben können die einzelnen Umformungsstationen auch stangenartige Körper, insbesondere sogenannte Reckstangen aufweisen, welche in die Kunststoffvorformlinge einführbar sind, um diese in deren Längsrichtung zu dehnen

Vorteilhaft ist der Reinraum ring- oder torusartig um die Umformungsstationen und/oder den Transportpfad der Kunststoffbehältnisse ausgebildet. Bei einer weiteren bevorzugten Ausführungsform erlaubt die Transporteinrichtung einen vereinzelten Transport der einzelnen Kunststoffvorformlinge.

Daher wird im Gegensatz zum Stand der Technik vorgeschlagen, dass die Beobachtung der Behältnisse bzw. deren Inspektion durch die Reinraumgrenze hindurch erfolgt. Zu diesem Zweck kann beispielsweise die Reinraumgrenze wenigstens abschnittsweise durch ein Fenster oder ein sonstiges transparentes Element gebildet werden, durch welche hindurch eine Kamera die Behältnisse beobachten kann. Dabei kann dieses transparente Element sich in einer Umfangsrichtung um eine Drehachse erstrecken, um welche sich ein Träger, an dem die einzelnen Umformungseinrichtungen angeordnet sind, dreht.

Dieses transparente Element kann dabei als Fenster ausgestaltet sein, durch welches hindurch die Behältnisse beobachtet werden können. Bei einer bevorzugten Ausführungsform ist dieses transparente Element bzw. Fenster temperierbar und insbesondere beheizbar ausgestaltet. Auf diese Weise kann beispielsweise bei Auftreten von Kondensation dieses Fenster freigehalten werden. Bei einer weiteren bevorzugten Ausführungsform kann auch ein Fenster in demjenigen Bereich der Vorrichtung vorgesehen sein, durch den hindurch die Behältnisse (von aussen her) beleuchtet werden.

Weiterhin ist es auch möglich, dass diese transparenten Bereiche reinigbar sind und bevorzugt weist die Vorrichtung eine Reinigungseinrichtung auf, welche zum automatischen Reinigen zumindest derjenigen Bereiche bzw. Fenster dient, durch welche hindurch eine Beobachtung der Behältnisse erfolgt beispielsweise mittels Scheibenwischer oder Abblasung mit einem sterilem Medium. Bei einer weiteren bevorzugten Ausführungsform ist es auch möglich, dass diese Fenster bzw. Sichtbereiche entspiegelt sind, um Verfälschungen bei der Bildaufnahme vorzubeugen.

Bevorzugt werden Schutzgläser nicht plan d.h. schräg zur Bildaufnahmevorrichtung eingebaut um einerseits störende Reflexionen von der Bildaufnahmeeinrichtung wegzulenken und andererseits baulich Vorsorge zu tragen, eventuelles Spritzwasser abfließen zu lassen. Bevorzugt bewegen sich diese Fensterbereiche gegenüber der Bildaufnahmeeinrichtung in einen geschützten Bereich in dem diese/ dieses entnommen, gereinigt und sterilisiert werden kann/ können. Besonders bevorzugt befindet sich im Sterilraum ein Luftvorhang vor dem Schutzglas um etwaiges Spritzwasser abzulenken. Es wäre jedoch auch denkbar, dass die besagten Fensterbereiche stationär angeordnet sind und im Falle der Reinigung des aseptischen Bereichs mittels eines abdichten Schutzes automatisiert abgedeckt werden.

Es wird daher vorgeschlagen, dass die Inspektionseinrichtung in Baugruppen unterteilt wird, die besonders bevorzugt von außen in den aseptischen Raum hineingebaut werden und auch in Hauptkomponenten die von außen erreichbar und demontierbar sind, sodass Wartungstätigkeiten durchgeführt werden können, ohne hierzu den Reinraum öffnen zu müssen. So ist beispielsweise die Bildaufnahmeeinrichtung beispielweise die Kamera zugänglich, ohne dass hier der Reinraum geöffnet werden muss bzw. die Sterilität des Reinraums unterbrochen werden muss.

Vorzugsweise ist es möglich, dass auch bei einer Wartung oder Reparatur der Inspektionseinrichtung keine Öffnung des Reinraums nötig ist.

Besonders vorteilhaft ist die Entkopplung von Reinraum zu Inspektionseinheiten beim Reinigungsprozess des aseptischen Bereichs. Systembedingt wird bevorzugt beim Reinigungsprozess mit Temperaturen bis zu 60° und mehr gearbeitet die durch die bauliche Trennung von Kameraeinheit bzw. Lampeneinheit zu Sterilraumgrenze wirkungsvoll entkoppelt ist bzw. eine eventuell notwendige Kühlung der Elektronik von der "nicht steril Seite her" einfach zu bewerkstelligen ist.

Erfindungsgemäss weist die Inspektionseinrichtung eine Beleuchtungseinrichtung auf, welche dazu geeignet und bestimmt ist, wenigstens einen Abschnitt der Behältnisse zu beleuchten. Vorteilhaft handelt es sich dabei um einen Abschnitt, der auch von der Bildaufnahmeeinrichtung beleuchtet wird. Dabei ist es möglich, dass die Beleuchtungseinrichtung mit der Bildaufnahmeeinrichtung mechanisch gekoppelt ist, beispielsweise über ein Gestänge. Auf diese Weise kann ein vorgegebener Abstand zwischen der Bildaufnahmeeinrichtung und der Beleuchtungseinrichtung vorgegeben werden. Besonders bevorzugt ist die Bildaufnahmeeinrichtung dazu geeignet und bestimmt, insbesondere einen Bodenbereich der gefertigten Behältnisse zu beobachten. Dabei kann eine Beobachtung dieser Bodenbereiche sowohl im Auflicht-, als auch im Durchlichtverfahren erfolgen. Besonders bevorzugt erfolgt die Beobachtung der Behältnisse bzw. der Böden in einem Durchlichtverfahren. So ist es möglich, dass die Böden von unten her beleuchtet werden und anschließend mittels einer Kamera beobachtet werden. Dabei kann eine Beobachtung der Böden beispielsweise durch eine Mündung der Behältnisse hindurch erfolgen. In einer weiteren vorteilhaften Ausführungsform beleuchtet die Beleuchtungseinrichtung die Behältnisse ebenfalls durch wenigstens eine Wandung des Reinraums hindurch. Zu diesem Zweck kann auch diese Wandung bzw. ein Bereich dieser Wandung transparent ausgeführt sein. Es wird damit hier vorgeschlagen, dass auch die Beleuchtungseinrichtung zumindest teilweise außerhalb des Reinraums bzw. außerhalb der Reinraumgrenzen angeordnet ist.

Erfindungsgemäss ist die Beleuchtungseinrichtung derart angeordnet, dass die Behältnisse zwischen der Beleuchtungseinrichtung und der Bildaufnahmeeinrichtung transportiert werden. So ist es beispielsweise möglich, dass die Beleuchtungseinrichtung die Behältnisböden von unten her beobachtet und die Bildaufnahmeeinrichtung die so beleuchteten Böden von oben her beobachtet bzw. aufnimmt.

Dabei ist es zusätzlich möglich, dass die Beleuchtungseinrichtung nach unten bzw. in eine Richtung abgezogen werden kann. Auch ist es möglich, dass die Bildaufnahmeeinrichtung noch oben bzw. auch in einer vorgegebenen Richtung abgezogen werden kann.

Bei einer weiteren bevorzugten Ausführungsform weist die Beleuchtungseinrichtung ein Linsenelement und insbesondere aber nicht ausschließlich eine sogenannte Fresnel-Linse auf. Insbesondere bei dem hier beschriebenen Aufbau ist eine Fresnel-Linse besonders geeignet, um entsprechend gerichtetes Licht, welches zur Beleuchtung dient, zu erzeugen.

Bei einer weiteren vorteilhaften Ausführungsform ist die Bildaufnahmeeinrichtung derart angeordnet, dass sie die Behältnisse entlang der Längsrichtung beobachtet. Dies ist insbesondere zur Bodenbeobachtung der Behältnisse besonders vorteilhaft.

Bei einer weiteren vorteilhaften Ausführungsform weist die Vorrichtung eine Beaufschlagungseinrichtung auf, welche den Reinraum mit einem gasförmigen Medium beaufschlagt. Bevorzugt ist dabei diese Beaufschlagungseinrichtung derart ausgelegt, dass sie den Reinraum unter einen Überdruck gegenüber einer (unsterilen) Umgebung setzt. Insbesondere durch einen derartigen Überdruck kann erreicht werden, dass von außen keinerlei Fremdkörper in den Reinraum gelangen. Dabei können beispielsweise Einlässe in den Reinraum für ein Sterilgas vorgesehen sein. Auch können Auslässe vorgesehen sein, um in definierter Weise ein gas aus dem Sterilraum bzw. Reinraum entweichen zu lassen. Bevorzugt ist jedoch der Sterilraum bzw. Reinraum derart ausgebildet, dass er mittels einer und bevorzugt mehreren Wandungen gegenüber einer Umgebung abgegrenzt ist.

Bei einer weiteren vorteilhaften Ausführungsform ist die Inspektionseinrichtung und/oder die Bildaufnahmeeinrichtung dem Reinraum gegenüber bewegbar. Dabei kann eine Bewegbarkeit insbesondere auch in einer Längsrichtung der zu beobachtenden Behältnisse gegeben sein. Durch diese Bewegbarkeit wird insbesondere eine Wartung der Bildaufnahmeeinrichtung und/oder der Beleuchtungseinrichtung erleichtert.

Die vorliegende Erfindung ist weiterhin auf ein Verfahren zum Behandeln von Behältnissen und insbesondere zum Umformen von Kunststoffvorformlingen zu Kunststoffbehältnissen gerichtet. Dabei werden die Kunststoffvorformlinge und/oder Kunststoffbehältnisse mittels einer Transportvorrichtung entlang eines vorgegeben Transportpfads transportiert, wobei diese Transportvorrichtung einen beweglichen Träger aufweist, an dem eine Vielzahl von Behandlungsstationen angeordnet ist, welche die Kunststoffvorformlinge und/oder Kunststoffbehältnisse während deren Transport behandeln. Weiterhin werden die Kunststoffvorformlinge und/oder Kunststoffbehältnisse durch einen Reinraum transportiert, der einen Transportpfad der Kunststoffbehältnisse bzw. der Kunststoffvorformlinge und/oder von Umformungsstationen, die zum Umformen der Kunststoffvorformlinge dienen wenigstens abschnittsweise umgibt und der mittels wenigstens einer Wandung gegenüber einer Umgebung abgegrenzt wird.

Erfindungsgemäß werden die Kunststoffbehältnisse mittels mindestens einer Inspektionseinrichtung inspiziert, wobei diese Inspektionseinrichtung eine Bildaufnahmeeinrichtung aufweist und wobei diese Bildaufnahmeeinrichtung wenigstens teilweise außerhalb des Reinraums angeordnet ist und wenigstens einen Bereich der Behältnisse durch wenigstens eine Wandung des Reinraums hindurch beobachtet. Auf diese Weise erfolgt auch verfahrensseitig eine Beobachtung der Behältnisse durch die Reinraumgrenze des Reinraums hindurch.

Vorteilhaft erfolgt dabei eine Beleuchtung der Behältnisse während deren Transport. Bevorzugt werden die Behältnisse durch eine Beleuchtungseinrichtung beleuchtet und insbesondere auch durch eine Sterilraumgrenze bzw. Reinraumgrenze des Reinraums hindurch beleuchtet. Bei einem weiteren bevorzugten Verfahren werden die Behältnisse durch getaktetes bzw. Blitzlicht beleuchtet.

Bei einem weiteren bevorzugten Verfahren werden die Kunststoffbehältnisse nach deren Umformung inspiziert. Dies bedeutet, dass zunächst die Kunststoffvorformlinge zu Kunststoffbehältnissen umgeformt und insbesondere expandiert werden und anschließend die so gefertigten Behältnisse an der Umformstation oder an dem nachfolgenden Transportpfad inspiziert werden.

Es wäre dabei möglich, dass die Inspektionseinrichtung stationär gegenüber dem Transportpfad bzw. der Transportbewegung der Kunststoffbehältnisse angeordnet ist. Es wäre doch auch möglich, dass eine oder eine Vielzahl von Inspektionseinrichtungen vorgesehen sind, welche sich mit den Behältnissen mitbewegen.

Weitere Vorteile und Ausführungsformen ergeben sich aus den beigefügten Zeichnungen:
Darin zeigen:
- Fig. 1: eine grob schematische Darstellung einer erfindungsgemäßen Vorrichtung; und
- Fig. 2: eine Darstellung einer erfindungsgemäßen Vorrichtung.

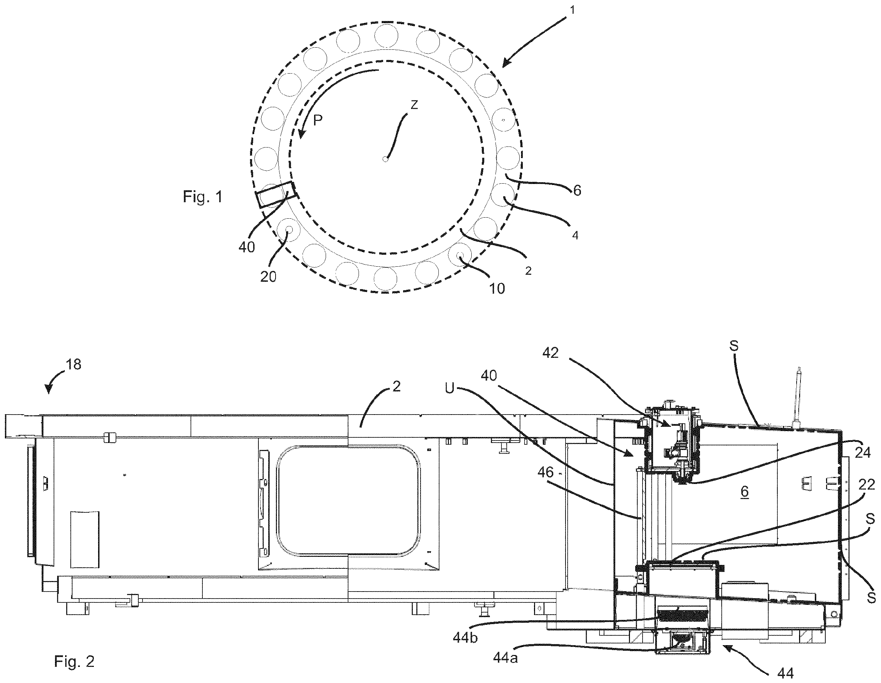

Fig. 1 zeigt eine schematische Darstellung einer erfindungsgemäßen Vorrichtung 1. Diese Vorrichtung 1. Diese Vorrichtung weist einen um eine Drehachse Z und in Richtung des Pfeils P drehbaren Träger 2 auf, an dem eine Vielzahl von Umformungsstationen 4 angeordnet ist. Diese Umformungsstationen dienen, wie oben ausgeführt, dazu, um Kunststoffvorformlinge 10 zu Kunststoffbehältnissen 20 umzuformen.

Das Bezugszeichen 6 kennzeichnet einen Reinraum, der zumindest den Transportpfad der Umformungsstationen 4 und damit auch der Kunststoffvorformlinge torusartig umgibt. Das Bezugszeichen 40 kennzeichnet die Inspektionseinrichtung, welche zum Inspizieren der geformten Behältnisse 20 (bei denen es sich insbesondere um Kunststoffflaschen handelt) dient. Diese Inspektionseinrichtung ist dabei außerhalb des Reinraums angeordnet. Der Reinraum wird durch die beiden gestrichelte Linien begrenzt. Gleichwohl können (nicht gezeigte) Schleusen vorgesehen sein, durch welche die Kunststoffvorformlinge in den Reinraum eingeführt werden können und/oder durch welche die geblasenen Kunststoffbehältnisse aus dem Reinraum entnommen werden können.

Fig. 2 zeigt eine detailliertere Darstellung der erfindungsgemäßen Vorrichtung. Das Bezugszeichen 6 kennzeichnet wieder den Reinraum, der sich innerhalb der Reinraumgrenze S befindet. Innerhalb dieses Reinraums befinden sich die (in Fig. 2 nicht gezeigten) Umformungsstationen.

Die insgesamt mit 40 bezeichnet Inspektionseinrichtung weist eine Beobachtungseinrichtung bzw. Bildaufnahmeeinrichtung 42 auf, welche die Behältnisse durch ein nur schematisch dargestelltes Fenster 24 hindurch beobachtet. Dabei ist diese Beobachtungseinrichtung in der Längsrichtung L der Umformungsstationen (und auch der expandierten Behältnisse) bzw. in einer vertikalen Richtung ausgerichtet und beobachtet die Behältnisse insbesondere in dieser Richtung.

Bevorzugt kann dieses Fenster ringförmig ausgebildet sein und sich ebenfalls um die Drehachse Z herum drehen. Es wäre jedoch auch denkbar, dass dieses Fenster stationär angeordnet ist. Dieses Fenster 24 ist damit auch der Wandungsbereich, durch welchen hindurch die Bildaufnahmeeinrichtung die im Inneren des Reinraums befindlichen Behältnisse beobachtet.

Die Bildaufnahmeeinrichtung 42 ist damit, wie in Fig. 2 gezeigt, außerhalb des Reinraums 6 angeordnet. Genauer gesagt ist diese Bildaufnahmeeinrichtung hier oberhalb des Reinraums angeordnet. Das Bezugszeichen 44 kennzeichnet eine Beleuchtungseinrichtung, welche ebenfalls Bestandteil der insgesamt mit 40 bezeichneten Inspektionseinrichtung ist. Diese Beleuchtungseinrichtung 44 ist hier ebenfalls außerhalb des Reinraums 6, hier jedoch insbesondere unterhalb des Reinraums 6 angeordnet. Damit werden die Behältnisse hier zwischen der Bildaufnahmeeinrichtung 42 und der Beleuchtungseinrichtung 44 transportiert.

Die Beleuchtungseinrichtung 44 kann eine Lichtquelle 44a aufweisen. Diese Lichtquelle kann dabei beispielsweise eine Vielzahl von LED's aufweisen, welche das zur Inspektion dienende Licht erzeugen. Das Bezugszeichen 44b zeigt Streu- und/oder Linsenelemente wie etwa eine sog. Fresnellinse. Diese ist insbesondere auch außerhalb des Reinraums angeordnet.

Das Bezugszeichen 22 kennzeichnet einen weiteren Fensterabschnitt, durch welchen hindurch die Beleuchtung der Behältnisse erfolgt.

Das Bezugszeichen 46 bezieht sich auf eine mechanische Verbindung zwischen der Bildaufnahmeeinrichtung und der Beleuchtungseinrichtung wie insbesondere aber nicht ausschließlich ein Gestänge. Auf diese Weise kann ein Abstand zwischen der Bildaufnahmeeinrichtung und der Beleuchtungseinrichtung fixiert werden, wobei jedoch auch eine Änderung dieses Abstands möglich ist.

Zur Abgrenzung des Reinraums können Dichtungseinrichtungen wie etwa die Dichtungseinrichtung 18 vorgesehen sein. Diese Dichtungseinrichtungen können dabei als Wasserschloss ausgeführt sein.

### Bezugszeichenliste

- 1: Vorrichtung
- 2: Träger
- 4: Umformungsstation
- 6: Reinraum
- 10: Kunststoffvorformlinge
- 18: Dichtungseinrichtung
- 20: Kunststoffbehältnisse
- 22: transparente Wandung, Fenster
- 24: transparente Wandung, Fenster
- 40: Inspektionseinrichtung
- 42: Bildaufnahmeeinrichtung
- 44: Beleuchtungseinrichtung
- 44a: Lichtquelle
- 44b: Streu und/oder Linsenelemente
- 46: mechanische Verbindung
- Z: Drehachse
- U: Übergang beweglicher / unbeweglicher Bereich
- S: Sterilraumgrenze
- L: Längsrichtung

## Patentansprüche

1. Vorrichtung (1) zum Behandeln von Behältnissen und insbesondere zum Umformen von Kunststoffvorformlingen (10) zu Kunststoffbehältnissen (20) mit einer Transportvorrichtung, welche die Behältnisse entlang eines vorgegebenen Transportpfads (P) transportiert, wobei diese Transporteinrichtung einen beweglichen Träger (2) aufweist, an dem eine Vielzahl von Behandlungsstationen (4) angeordnet ist, welche jeweils zum Behandeln der Kunststoffvorformlinge (10) geeignet und bestimmt sind, mit einem Reinraum (6), der den Transportpfad der Kunststoffvorformlinge wenigstens abschnittweise umgibt und der mittels wenigstens einer Wandung gegenüber einer Umgebung abgegrenzt ist, wobei die Vorrichtung (1) mindestens eine Inspektionseinrichtung (40) zum Inspizieren der Behältnisse (20) aufweist, wobei diese Inspektionseinrichtung (40) eine Bildaufnahmeeinrichtung (42) aufweist, wobei diese Bildaufnahmeeinrichtung (42) wenigstens teilweise außerhalb des Reinraums (6) angeordnet ist und wenigstens einen Bereich der Behältnisse (20) durch wenigstens eine Wandung (24) hindurch beobachtet, wobei die Inspektionseinrichtung (40) eine Beleuchtungseinrichtung (44) aufweist, welche wenigstens einen Abschnitt der Behältnisse (20) beleuchtet, **dadurch gekennzeichnet, dass** die Beleuchtungseinrichtung (44) derart angeordnet ist, dass die Behältnisse zwischen der Beleuchtungseinrichtung (44) und der Bildaufnahmeeinrichtung (42) transportiert werden.

2. Vorrichtung (1) nach Anspruch 1,
**dadurch gekennzeichnet, dass**
die Beleuchtungseinrichtung die Behältnisse (20) durch wenigstens eine Wandung (22) des Reinraums hindurch beleuchtet.

3. Vorrichtung (1) nach wenigstens einem der vorangegangenen Ansprüche,
**dadurch gekennzeichnet, dass**
die Bildaufnahmeeinrichtung (42) derart angeordnet ist, dass sie die Behältnisse entlang deren Längsrichtung beobachtet.

4. Vorrichtung (1) nach wenigstens einem der vorangegangenen Ansprüche,
**dadurch gekennzeichnet, dass**
die Vorrichtung (1) eine Beaufschlagungseinrichtung aufweist, welche den Reinraum (6) wenigstens zeitweise unter einen Überdruck setzt.

5. Vorrichtung (1) nach wenigstens einem der vorangegangenen Ansprüche,
**dadurch gekennzeichnet, dass**
die Inspektionseinrichtung (40) und/oder die Bildaufnahmeeinrichtung (42) gegenüber dem Reinraum und/oder wenigstens eine den Reinraum (6) begrenzenden Wandung bewegbar ist.

6. Verfahren zum Behandeln von Behältnissen und insbesondere zum Umformen von Kunststoffvorformlingen (10) zu Kunststoffbehältnissen (20) wobei die Kunststoffvorformlinge und/oder Kunststoffbehältnisse mittels Transportvorrichtung entlang eines vorgegebenen Transportpfads (P) transportiert werden, wobei diese Transporteinrichtung einen beweglichen Träger (2) aufweist, an dem eine Vielzahl von Behandlungsstationen (4) angeordnet ist, welche die Kunststoffvorformlinge und/oder Kunststoffbehältnisse während deren Transport behandeln und wobei die Kunststoffvorformlinge und/oder Kunststoffbehältnisse durch einem Reinraum (6) transportiert werden, der deren Transportpfad wenigstens abschnittweise umgibt und der mittels wenigstens einer Wandung gegenüber einer Umgebung abgegrenzt wird, wobei die Kunststoffbehältnisse (20) mittels einer Inspektionseinrichtung (40) inspiziert werden, wobei diese mindestens eine Inspektionseinrichtung (40) eine Bildaufnahmeeinrichtung (42) aufweist, wobei diese Bildaufnahmeeinrichtung (42) wenigstens teilweise außerhalb des Reinraums (6) angeordnet ist und wenigstens einen Bereich der Behältnisse (20) durch wenigstens eine Wandung (24) des Reinraums (6) hindurch beobachtet, wobei die Inspektionseinrichtung (40) eine Beleuchtungseinrichtung (44) aufweist, welche wenigstens einen Abschnitt der Behältnisse (20) beleuchtet, **dadurch gekennzeichnet, dass** die Beleuchtungseinrichtung (44) derart angeordnet ist, dass die Behältnisse zwischen der Beleuchtungseinrichtung (44) und der Bildaufnahmeeinrichtung (42) transportiert werden.

7. Verfahren nach Anspruch 6,
**dadurch gekennzeichnet, dass**
die Kunststoffbehältnisse nach deren Umformung inspiziert werden.

8. Verfahren nach wenigstens einem der vorangegangenen Ansprüche 6 oder 7,
**dadurch gekennzeichnet, dass**
die Behältnisse durch eine weitere Wandung (22) des Reinraums (6) hindurch beleuchtet werden.

## Claims

1. Apparatus (1) for processing containers and in particular for reshaping plastic preforms (10) into plastic containers (20) with a transport device which transports the containers along a predetermined transport path (P), wherein this transport device has a movable support (2), on which a plurality of processing stations (4) are arranged, which in each case are suitable and intended for processing the plastic preforms (10), with a clean room (6), which surrounds at least portions of the transport path of the plastic preforms and which is delimited by means of at least one wall relative to an environment,
wherein the device (1) has at least one inspection device (40) for inspecting the containers (20), wherein this inspection device (40) has an image capturing device (42), wherein this image capturing device (42) is arranged at least partially outside the clean room (6) and monitors at least one region of the containers (20) through at least one wall (24), wherein the inspection device (40) has an illumination device (44) which illuminates at least a portion of the containers (20), **characterised in that**
the illumination device (44) is arranged in such a way that the containers are transported between the image capturing device (44) and the illumination device (42).

2. Apparatus (1) according to claim 1,
**characterised in that**
the illumination device illuminates the containers (20) through at least one wall (22) of the clean room.

3. Apparatus (1) according to at least one of the preceding claims,
**characterised in that**
the image recording device (42) is arranged in such a way that it monitors the containers along their longitudinal direction.

4. Apparatus (1) according to at least one of the preceding claims,
**characterised in that**
the apparatus (1) has an application device which puts the clean room (6) under an overpressure at least for a while.

5. Apparatus (1) according to at least one of the preceding claims,
**characterised in that**
the inspection device (40) and/or the image capturing device (42) is/are movable relative to the clean room and/or at least one wall delimiting the clean room (6).

6. Method for processing containers and in particular for reshaping plastic preforms (10) into plastic containers (20), wherein the plastic preforms and/or plastic containers are transported by means of a transport device along a predetermined transport path (P), wherein this transport device has a movable support (2) on which a plurality of processing stations (4) are arranged, which process the plastic preforms and/or plastic containers while they are being transported, and wherein the plastic preforms and/or plastic containers are transported through a clean room (6) which surrounds at least portions of the transport path thereof which is delimited by means of at least one wall relative to an environment, wherein the plastic containers (20) are inspected by means of an inspection device (40), wherein this at least one inspection device (40) has an image capturing device (42), wherein this image capturing device (42) is arranged at least partially outside the clean room (6) and monitors at least one region of the containers (20) through at least one wall (24) of the clean room (6), wherein the inspection device (40) has an illumination device (44) which illuminates at least a portion of the containers (20),
**characterised in that**
the illumination device (44) is arranged in such a way that the containers are transported between the image capturing device (44) and the illumination device (42).

7. Method according to claim 6,
**characterised in that**
the plastic containers are inspected after they have been reshaped.

8. Method according to at least one of the preceding claims 6 or 7,
**characterised in that**
the containers are illuminated through a further wall (22) of the clean room (6).

## Revendications

1. Dispositif (1) pour traiter des récipients et en particulier pour façonner des préformes en matière plastique (10) en des récipients en matière plastique (20) avec un dispositif de transport, lequel transporte les récipients le long d'un trajet de transport (P) prédéfini, dans lequel ledit système de transport présente un support mobile (2), sur lequel est disposée une pluralité de postes de traitement (4), lesquels sont adaptés pour et se destinent respectivement à traiter les préformes en matière plastique (10), avec une salle blanche (6), qui entoure au moins par endroits le trajet de transport des préformes en matière plastique et qui est délimitée au moyen d'au moins une paroi par rapport à un environnement,
dans lequel le dispositif (1) présente au moins un système d'inspection (40) pour inspecter les récipients (20), dans lequel ledit système d'inspection (40) présente un système d'enregistrement d'images (42), dans lequel ledit système d'enregistrement d'images (42) est disposé au moins en partie à l'extérieur de la salle blanche (6) et observe au moins une zone des récipients (20) à travers au moins une paroi (24), dans lequel le système d'inspection (40) présente un système d'éclairage (44), lequel éclaire au moins une section des récipients (20),
**caractérisé en ce que**
le système d'éclairage (44) est disposé de telle manière que les récipients sont transportés entre le système d'éclairage (44) et le système d'enregistrement d'images (42).

2. Dispositif (1) selon la revendication 1,
**caractérisé en ce que**
le système d'éclairage éclaire les récipients (20) à travers au moins une paroi (22) de la salle blanche.

3. Dispositif (1) selon au moins une quelconque des revendications précédentes,
**caractérisé en ce que**
le système d'enregistrement d'images (42) est disposé de telle manière qu'il observe les récipients le long de leur sens longitudinal.

4. Dispositif (1) selon au moins l'une quelconque des revendications précédentes,
**caractérisé en ce que**
le dispositif (1) présente un système de contrainte, lequel soumet la salle blanche (6) au moins temporairement à une surpression.

5. Dispositif (1) selon au moins l'une quelconque des revendications précédentes,
**caractérisé en ce que**
le système d'inspection (40) et/ou le système d'enregistrement d'images (42) peuvent être déplacés par rapport à la salle blanche et/ou à au moins une paroi délimitant la salle blanche (6).

6. Procédé pour traiter des récipients et en particulier pour façonner des préformes en matière plastique (10) en des récipients en matière plastique (20), dans lequel les préformes en matière plastique et/ou les récipients en matière plastique sont transportés au moyen d'un dispositif de transport le long d'un trajet de transport (P) prédéfini, dans lequel ledit système de transport présente un support mobile (2), sur lequel est disposée une pluralité de postes de traitement (4), lesquels traitent les préformes en matière plastique et/ou les récipients en matière plastique au cours de leur transport et dans lequel les préformes en matière plastique et/ou les récipients en matière plastique sont transportés à travers une salle blanche (6), qui entoure au moins par endroits leur trajet de transport et qui est délimitée au moyen d'au moins une paroi par rapport à un environnement,
dans lequel les récipients en matière plastique (20) sont inspectés au moyen d'un système d'inspection (40), dans lequel ledit au moins un système d'inspection (40) présente un système d'enregistrement d'images (42), dans lequel ledit système d'enregistrement d'images (42) est disposé au moins en partie à l'extérieur de la salle blanche (6) et observe au moins une zone des récipients (20) à travers au moins une paroi (24) de la salle blanche (6), dans lequel le système d'inspection (40) présente un système d'éclairage (44), lequel éclaire au moins une section des récipients (20),
**caractérisé en ce que**
le système d'éclairage (44) est disposé de telle manière que les récipients sont transportés entre le système d'éclairage (44) et le système d'enregistrement d'images (42).

7. Procédé selon la revendication 6,
**caractérisé en ce que**
les récipients en matière plastique sont inspectés après leur façonnage.

8. Procédé selon au moins l'une quelconque des revendications précédentes 6 ou 7,
**caractérisé en ce que**
les récipients sont éclairés à travers une autre paroi (22) de la salle blanche (6).
